(19) **Europäisches Patentamt / European Patent Office / Office européen des brevets**

(11) **EP 4 454 076 B1**

(12) **FASCICULE DE BREVET EUROPEEN**

(45) Date de publication et mention de la délivrance du brevet:
**27.08.2025 Bulletin 2025/35**

(21) Numéro de dépôt: **22834605.2**

(22) Date de dépôt: **09.12.2022**

(51) Classification Internationale des Brevets (IPC):
*H01S 3/04* (2006.01)    *H01S 3/042* (2006.01)
*H01S 3/06* (2006.01)    *H01S 3/07* (2006.01)
*H01S 3/02* (2006.01)    *H01S 3/16* (2006.01)
*H01S 3/23* (2006.01)

(52) Classification Coopérative des Brevets (CPC):
**H01S 3/0407; H01S 3/042; H01S 3/0604; H01S 3/07;** H01S 3/025; H01S 3/1618; H01S 3/1643; H01S 3/2325; H01S 3/235

(86) Numéro de dépôt international:
**PCT/EP2022/085134**

(87) Numéro de publication internationale:
**WO 2023/117482 (29.06.2023 Gazette 2023/26)**

(54) **TÊTE AMPLIFICATRICE LASER À REFROIDISSEMENT PAR LIQUIDE**

FLÜSSIGKEITSGEKÜHLTER LASERVERSTÄRKERKOPF

LIQUID-COOLED LASER AMPLIFIER HEAD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.12.2021 FR 2114018**

(43) Date de publication de la demande:
**30.10.2024 Bulletin 2024/44**

(73) Titulaires:
• **Centre National de la Recherche Scientifique**
**75016 Paris (FR)**
• **UNIVERSITE DE BORDEAUX**
**33000 Bordeaux (FR)**
• **Commissariat à l'Energie Atomique et aux Energies**
**Alternatives**
**75015 Paris (FR)**

(72) Inventeurs:
• **MARION, Denis**
**33600 Pessac (FR)**
• **FERAL, Christophe**
**33127 Martignas Sur Jalle (FR)**
• **LHERMITE, Jérôme**
**64600 Anglet (FR)**
• **BALCOU, Philippe**
**33405 Talence Cedex (FR)**

(74) Mandataire: **IPAZ**
**Bâtiment Platon**
**Parc Les Algorithmes**
**91190 Saint-Aubin (FR)**

(56) Documents cités:
**CN-A- 112 448 253    CN-B- 107 204 563**

• **R Z NIE ET AL: "Fully immersed liquid cooling thin-disk oscillator", LASER PHYSICS LETTERS, vol. 11, no. 11, 22 September 2014 (2014-09-22), Germany, pages 115808, XP055608701, ISSN: 1612-2011, DOI: 10.1088/1612-2011/11/11/115808**
• **LI PEILIN ET AL: "Effects of turbulent flow field on wavefront aberration in liquid-convection-cooled disk laser oscillator", APPLIED PHYSICS B, SPRINGER BERLIN HEIDELBERG, BERLIN/ HEIDELBERG, vol. 119, no. 2, 22 March 2015 (2015-03-22), pages 371 - 380, XP035491551, ISSN: 0946-2171, [retrieved on 20150322], DOI: 10.1007/S00340-015-6085-1**

- JI SHENGZHE ET AL: "Hydrodynamic and thermal simulation for high energy large size Nd:YAG liquid-cooled laser amplifier", SPIE PROCEEDINGS; [PROCEEDINGS OF SPIE ISSN 0277-786X], SPIE, US, vol. 11717, 2 December 2020 (2020-12-02), pages 1171704 - 1171704, XP060136739, ISBN: 978-1-5106-3673-6, DOI: 10.1117/12.2576035
- XING FU ET AL: "3kW liquid–cooled elastically-supported Nd:YAG multi-slab CW laser resonator", OPTICS EXPRESS, vol. 22, no. 15, 22 July 2014 (2014-07-22), pages 18421, XP055608718, DOI: 10.1364/OE.22.018421
- KE WANG ET AL: "7kW direct-liquid-cooled side-pumped Nd:YAG multi-disk laser resonator", OPTICS EXPRESS, vol. 24, no. 13, 23 June 2016 (2016-06-23), pages 15012, XP055608704, DOI: 10.1364/OE.24.015012

**Description**

L'invention porte sur une tête amplificatrice laser à état solide, destinée à être utilisée à haute puissance (puissance moyenne de l'ordre de 1 kW ou plus, impulsions de l'ordre de 1 J ou plus). La tête laser de l'invention est particulièrement adaptée à la réalisation d'un amplificateur laser multi-passage, mais peut également être placée à l'intérieur d'une cavité optique pour réaliser un amplificateur régénératif.

Lors de la conception d'un amplificateur laser à état solide, en particulier destiné à travailler à des puissances élevées, le refroidissement du milieu actif revêt une importance particulière. En effet, une température excessive affecte défavorablement la capacité d'amplification ainsi que la qualité optique du faisceau laser (effet de lentille thermique, déformations du milieu actif) et sa polarisation (biréfringence induite par le stress), et peut même provoquer la dégradation ou la rupture du milieu actif.

Il est connu de façonner le milieu actif en forme de plaque ou disque, avec typiquement une épaisseur inférieure - voire très inférieure - à un dixième de ses dimensions latérales. Le refroidissement peut alors se faire de plusieurs façons :

- Par la monture, reliée à un circuit de refroidissement interne.

- Par la surface arrière, réfléchissante, ce qui impose des épaisseurs très faibles de milieu actif (300 micromètres typiquement), et donc un grand nombre (typiquement 12 ou plus) de passages. C'est la technologie dite de disque mince (« thin disk » en anglais) ou de « miroir actif » pour des épaisseurs plus importantes (« active mirror » en anglais).

- Par un fluide incident sur les surfaces principales du disque en écoulement laminaire ; ce fluide est le plus souvent un gaz, mais il peut parfois s'agir d'un liquide. Par exemple, le document « Fully immersed liquid cooling thin-disk oscillator » (NIE, R. Z., SHE, J. B., ZHAO, P. F., et al. Laser Physics Letters, 2014, vol. 11, no 11, p. 115808) décrit un oscillateur laser dont le milieu actif est formé de deux plaques minces de Nd:YAG inclinées à l'angle de Brewster par rapport au trajet optique du faisceau laser et formant un angle entre elles, immergées dans un écoulement de liquide de refroidissement. Les documents « 3kW liquid-cooled elastically-supported Nd: YAG multi-slab CW laser resonator » (FU, Xing, LI, Peilin, LIU, Qiang, et al. Optics express, 2014, vol. 22, no 15, p. 18421-18432) et « 7kW direct-liquid-cooled side-pumped Nd: YAG multi-disk laser resonator » (WANG, Ke, TU, Bo, JIA, Chunyan, et al. Optics Express, 2016, vol. 24, no 13, p. 15012-15020) décrivent des oscillateurs laser dont le milieu actif est formé par un empilement de disques d'une épaisseur de l'ordre du millimètre, un liquide de refroidissement (D₂O) circulant dans les espaces entre les disques.

Il est également connu de mettre en rotation un milieu actif de grandes dimensions par rapport au diamètre du faisceau laser, le faisceau laser étant excentré par rapport à l'axe de rotation. La chaleur est alors stockée dans un plus grand volume et échangée sur une plus grande surface, ce qui atténue fortement les effets thermiques.

L'invention vise à procurer une tête amplificatrice laser présentant un refroidissement plus efficace que selon l'art antérieur, permettant donc d'atteindre un niveau de puissance plus élevé, sans dégradation de la qualité optique du faisceau laser.

Conformément à l'invention, l'amélioration du refroidissement est obtenue grâce à l'utilisation d'un liquide de refroidissement en écoulement turbulent. En effet il est connu qu'un fluide en écoulement turbulent en contact avec une paroi présente un coefficient d'échange thermique très supérieur qu'un écoulement laminaire du même fluide. De manière conventionnelle, ces écoulements sont évités car ils dégradent fortement les propriétés spatiales du faisceau laser. Conformément à l'invention, cet effet défavorable est évité ou à tout le moins minimisé en maintenant le liquide de refroidissement à une température telle que son coefficient thermo-optique est proche de zéro. Ainsi, les fluctuations de température au sein de l'écoulement turbulent ne se traduisent pas par des fluctuations d'indice optique susceptibles d'influencer la propagation du faisceau à amplifier. Dans le cas de l'eau à pression ambiante, par exemple, le coefficient thermo-optique s'annule à environ 0°C.

A cet effet, l'invention a pour objet une tête amplificatrice laser comprenant au moins une plaque d'un milieu actif laser à état solide disposée dans un carter pourvu d'un port d'entrée et d'un port de sortie pour un liquide de refroidissement, ainsi que d'au moins une fenêtre permettant à un faisceau laser à amplifier de traverser la ou les plaques de milieu actif laser, caractérisé en ce qu'elle comprend également :

- un moyen de refroidissement du milieu actif, le moyen de refroidissement comprenant un circuit de refroidissement relié au carter par l'intermédiaire du port d'entrée et du port de sortie, le circuit de refroidissement étant adapté pour mettre le liquide de refroidissement en circulation, le moyen de refroidissement comprenant au moins un canal de refroidissement disposé dans le carter, reliant le port d'entrée et le port de sortie, et en contact avec le milieu actif, dans lequel le liquide de refroidissement s'écoule de sorte à permettre un échange thermique entre le milieu actif et le liquide de refroidissement, le moyen de refroidissement comprenant également un moyen de régulation de la température du liquide de refroidissement apte à réguler une température du liquide de refroidissement telle qu'un coefficient thermo-optique *dn/dT* du liquide de refroidissement satisfasse à la condition suivante :

$$|dn/dT| \; < \; \frac{6\lambda_0}{\Delta T * \sum \varphi_H}$$

Et de préférence

$$|dn/dT| \; < \; \frac{3\lambda_0}{\Delta T * \sum \varphi_H}$$

où $\Delta T$ représente la différence de température entre le liquide de refroidissement et l'au moins une plaque du milieu actif, $\sum \varphi_H$ représente la somme des diamètres hydraulique des canaux de refroidissement traversés par le faisceau laser et $\lambda_0$ représente la longueur d'onde du faisceau laser dans le vide.

Selon un aspect de l'invention, le moyen de régulation de la température du liquide de refroidissement est apte à annuler le coefficient thermo-optique du liquide de refroidissement.

Selon un aspect de l'invention, le moyen de refroidissement comprend un moyen de régulation du débit du liquide de refroidissement apte à réguler un nombre de Reynolds du liquide de refroidissement de sorte à être supérieur à 2300.

Selon un aspect de l'invention, le liquide de refroidissement est de l'eau.

Selon un aspect de l'invention, le liquide de refroidissement est un mélange d'au moins deux substances chimiques et présente un coefficient thermo-optique différent de celui de chacune de ces au moins deux substances.

Selon un aspect de l'invention, le moyen de régulation de la température du liquide de refroidissement est apte à réguler la température du liquide de refroidissement entre 0°C et 10°C.

Selon un aspect de l'invention, le moyen de refroidissement comprend :

- un dispositif de stockage du liquide de refroidissement, ledit liquide de refroidissement étant à l'équilibre entre sa phase liquide et sa phase solide,

- un dispositif de pompage du liquide de refroidissement apte à aspirer la phase liquide du liquide de refroidissement du dispositif de stockage.

Selon un aspect de l'invention, le liquide de refroidissement est en contact avec une plaque de la pluralité de plaque du milieu actif.

Selon un aspect de l'invention, la tête amplificatrice laser comprend un hublot de contact, un volume d'isolation hygroscopique et un hublot excentré, le hublot de contact ayant une face en appui contre le carter, le hublot de contact, le volume d'isolation hygroscopique et le hublot excentré étant successivement alignés selon le flux laser.

Selon un aspect de l'invention, la tête amplificatrice laser comprend au moins un capteur positionné le long du circuit de refroidissement de manière à mesurer le débit et/ou la température du liquide de refroidissement de sorte à en déduire le nombre de Reynolds du liquide de refroidissement dans l'au moins un canal de refroidissement du carter.

Selon un aspect de l'invention, la tête amplificatrice laser comprend un système de filtrage physico-chimique et de purification biologique du liquide de refroidissement.

Selon un aspect de l'invention, la tête amplificatrice laser comprend un système de vérification de la qualité spatiale d'un faisceau laser amplifié à la sortie de la tête amplificatrice laser.

L'invention sera mieux comprise et d'autres avantages apparaîtront à la lecture de la description détaillée d'un mode de réalisation donné à titre d'exemple, description illustrée par le dessin joint dans lequel :

[Fig.1] la figure 1 représente une vue schématique d'une tête amplificatrice laser selon l'invention ;

[Fig.2] la figure 2 représente une vue schématique de la tête amplificatrice laser selon une variante ;

[Fig.3] la figure 3 représente un graphe de la distribution des fréquences spatiales d'un faisceau ayant traversé une tête amplificatrice en régime turbulent selon l'état de l'art;

[Fig.4] la figure 4 représente un graphe de la distribution des fréquences spatiales d'un faisceau ayant traversé une tête amplificatrice en régime turbulent selon l'invention ;

[Fig.5A] La figure 5A est une image strioscopique acquise par l'intermédiaire d'un capteur optique d'un faisceau laser amplifié ayant traversé un liquide de refroidissement en régime turbulent à une température de 20 °C ;

[Fig.5B] La figure 5B est une image strioscopique acquise par l'intermédiaire d'un capteur optique d'un faisceau laser amplifié ayant traversé un liquide de refroidissement en régime turbulent à une température de 15 °C ;

[Fig.5C] La figure 5C est une image strioscopique acquise par l'intermédiaire d'un capteur optique d'un faisceau laser amplifié ayant traversé un liquide de refroidissement en régime turbulent à une température de 10 °C ;

[Fig.5D] La figure 5D est une image strioscopique acquise par l'intermédiaire d'un capteur optique d'un faisceau laser amplifié ayant traversé un liquide de refroidissement en régime turbulent à une température de 5 °C ;

[Fig.5E] La figure 5E est une image strioscopique acquise par l'intermédiaire d'un capteur optique d'un faisceau laser amplifié ayant traversé un liquide de refroidissement en régime turbulent à une température de 1 °C ;

[Fig.6] la figure 6 représente la distribution angulaire dans un plan transverse à l'axe du faisceau laser, de l'énergie diffusée en dehors de l'angle couvert par ledit faisceau laser, après traversée d'un écoulement turbulent selon différentes températures.

Par souci de clarté, les mêmes éléments porteront les mêmes repères dans les différentes figures.

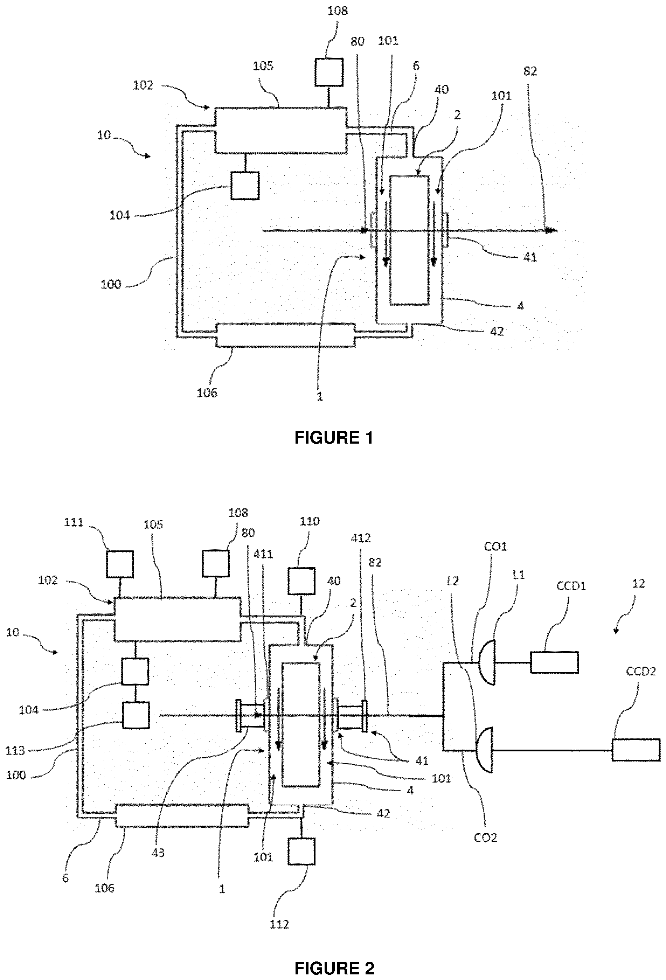

La figure 1 est une vue schématique d'une tête amplificatrice laser 1 selon l'invention. La tête amplificatrice laser 1 comprend au moins une plaque d'un milieu actif 2 laser à état solide disposées dans un carter 4. Le milieu actif 2 est constitué préférentiellement d'une pluralité de plaques, plus précisément de disques de grenat d'yttrium et aluminium (YAG) dopé avec de l'ytterbium (Yb :YAG). Le faisceau laser à incident 80 et le faisceau laser amplifié, représentant le faisceau laser incident 80 après que ce dernier a traversé le milieu actif 2, entrent et sortent du carter 4 par des fenêtres ou hublot 41, passent à travers l'au moins une plaque du milieu actif 2. La tête amplificatrice laser 1 comprend également un système de pompage optique longitudinal (non représenté) permettant l'amplification du faisceau laser incident 80, devenant alors un faisceau laser amplifié 82 en sortant du carter 4.

Comme énoncé précédemment, l'amplification du faisceau incident 80, en traversant le milieu actif 2 et par l'action de faisceaux laser annexes apportant de l'énergie dans la plaque de milieu actif 2, processus qualifié de « pompage optique », génère une grande quantité de chaleur à évacuer.

A cet effet, le carter 4 est pourvu d'un port d'entrée 40 et d'un port de sortie 42 pour un liquide de refroidissement 6.

La tête amplificatrice laser 1 comprend également un moyen de refroidissement 10 du milieu actif 2. Le moyen de refroidissement 10 comprend un circuit de refroidissement 100 relié au carter 4 par l'intermédiaire du port d'entrée 40 et du port de sortie 42 et est adapté pour mettre le liquide de refroidissement 6 en circulation de sorte à permettre un échange thermique entre le milieu actif 2 et le liquide de refroidissement 6. A cet effet, le moyen de refroidissement 10 comprend au moins un canal de refroidissement 101 à l'intérieur du carter 4, reliant le port d'entrée 40 et le port de sortie 42, et en contact avec le milieu actif 2, dans lequel le liquide de refroidissement s'écoule, de sorte à permettre la transition du liquide de refroidissement 6 le long de l'au moins une plaque du milieu actif 2 permettant ainsi un échange thermique entre le milieu actif 2 et le liquide de refroidissement 6. Cet au moins un canal de refroidissement 101 est ainsi défini par un diamètre hydraulique $\varphi_H$. De plus, le moyen de refroidissement 10 comprend un moyen de régulation 102 de la température du liquide de refroidissement 6 apte à réguler une température du liquide de refroidissement 6 telle qu'un coefficient thermo-optique $dn/dT$ du liquide de refroidissement 6 satisfasse à la condition suivante :

$$|dn/dT| \; < \; \frac{6\lambda_0}{\Delta T * \sum \varphi_H} \quad (C1)$$

Où $\Delta T$ représente la différence de température entre le liquide de refroidissement 6 et l'au moins une plaque du milieu actif 2, et plus précisément, la différence de température maximale avec la surface de la plaque, de l'au moins une plaque du milieu actif 2, exposée au liquide de refroidissement 6, $\sum \varphi_H$ représente la somme des diamètres hydrauliques $\varphi_H$ des canaux de refroidissement 101 traversés par le faisceau laser, et $\lambda_0$ représente la longueur d'onde du faisceau laser 80 dans le vide. Le nombre de traversées de chaque canal de refroidissement 101 est à prendre en compte comme terme de pondération dans la somme $\sum \varphi_H$ des diamètres hydrauliques $\varphi_H$. En effet, le faisceau laser incident 80 peut traverser plusieurs canaux de refroidissement 101, comme représenté en figure 1, dans une configuration dite droite, ou deux fois le même canal de refroidissement 101, en « aller et retour », dans une configuration de miroir actif. De plus, la répartition de température dans l'au moins une plaque de milieu actif 2 n'est pas homogène, le centre de l'au moins une plaque du milieu actif 2, à savoir son cœur, est notablement plus chaud que la périphérie.

En effet, il peut être considérer qu'une fluctuation maximale d'indice de réfraction $\Delta n$ entre deux points du liquide de refroidissement 6 puisse être définie par la formule $\left|\frac{dn}{dT}\right| * \Delta T$ et puisse se produire sur une échelle spatiale de turbulence L proportionnelle au diamètre hydraulique $\varphi_H$ du liquide de refroidissement 6. A titre d'exemple indicatif, $L = \frac{\varphi_H}{12}$. Cette fluctuation maximale d'indice de réfraction $\Delta n$ induit alors une variation locale de chemin optique $\Delta n * L$ qui est souhaitée très inférieure à la longueur d'onde de la lumière définie par $\lambda_0$ selon un facteur nommé alpha, qui est égal, à titre d'exemple indicatif, à la valeur de 8.

Le coefficient thermo-optique $|dn/dT|$ est défini comme la dérivée de l'indice optique du liquide de refroidissement par rapport à la température du liquide de refroidissement 6. En pratique, le coefficient thermo-optique définit la capacité du liquide à déformer un faisceau lumineux le traversant en fonction de paramètres tels que sa température ou son nombre de Reynolds. Ainsi, de manière idéale, le coefficient thermo-optique $dn/dT$ du liquide de refroidissement 6 doit être nul de sorte à ne pas déformer le faisceau lumineux le traversant. Néanmoins, la condition C1 suffit à réduire grandement cette déformation du faisceau lumineux.

Ainsi, le moyen de refroidissement 10 comprend un moyen de régulation du débit 104 du liquide de refroidissement 6 apte à réguler un nombre de Reynolds du liquide de refroidissement 6 de sorte à être supérieur à 2300. Dès lors, le liquide de refroidissement 6 s'écoule dans le circuit de refroidissement 100, et particulièrement dans le carter 4 et dans l'au moins un canal de refroidissement 101, en régime turbulent, augmentant davantage les échanges thermiques entre le milieu actif 2 et le liquide de refroidissement 6. Dès lors, l'utilisation d'un liquide de refroidissement 6, selon l'invention, c'est-à-dire travaillant selon une température permettant de limiter le coefficient thermo-optique du liquide de refroidissement 6 de sorte à respecter la condition C1 permet, malgré la turbulence et les instabilités liées à l'écoulement du liquide de refroidissement 6, de conserver la bonne qualité du faisceau laser amplifiée 82 lors de la traversé du liquide de refroidissement 6 par le faisceau laser 80 et/ou le faisceau laser amplifié 82. De plus, le liquide de refroidissement 6 est en contact physique avec l'au moins une plaque du milieu actif 2. Cette proximité présente l'avantage de simplifier l'architecture de la tête amplificatrice laser 1 et du circuit de refroidissement 100 sans impacter le faisceau laser incident 80 et/ou le faisceau laser amplifié 82.

L'échange thermique entre le milieu actif 2 et le liquide de refroidissement 6 dont le coefficient thermo-optique est faible, en travaillant sur la température du liquide de refroidissement 6, vise à améliorer l'extraction thermique en provenance de la tête amplificatrice laser 1 sans dégrader la qualité optique du faisceau laser incident 80 ou du faisceau laser amplifié 82 qui traverse le liquide de refroidissement 6. En effet, l'utilisation d'un liquide de refroidissement 6 dont le coefficient thermo-optique est faible, qui satisfasse la condition C1, pour une température du liquide de refroidissement relativement faible par rapport à la température du milieu actif 2, présente l'avantage d'augmenter la capacité réfrigérante du liquide sans dégrader le profil du faisceau laser amplifié 82.

De manière préférentielle, le moyen de régulation 102 de la température du liquide de refroidissement 6 est apte à annuler, c'est-à-dire rendre nulle, le coefficient thermo-optique $|dn/dT|$ du liquide de refroidissement 6, limitant ainsi toute déformation optique du faisceau laser incident 80 pendant l'extraction thermique des calories en provenance du milieu actif 2. En pratique, le moyen de régulation 102 régule la température du liquide de refroidissement 6 dans un intervalle autour de la valeur de température qui annule le coefficient thermo-optique $|$

$dn/dT|$. A titre d'exemple, pour de l'eau lourde $D_2O$, le moyen de régulation 102 régule la température de l'eau lourde au voisinage de 8°C, qui est la température annulant le coefficient thermo-optique $|dn/dT|$ de l'eau lourde $D_2O$. Dans le cas d'utilisation de l'eau standard comme liquide de refroidissement, le moyen de régulation 102 régule la température de l'eau standard voisinage immédiat de 0°C.

A titre indicatif, le moyen de refroidissement 10 selon l'invention augmente l'échange thermique entre le milieu actif 2 et le liquide de refroidissement 6 d'un facteur compris entre trois et cinq par rapport à une configuration de refroidissement de l'état de l'art présenté ci-dessus.

Le liquide de refroidissement 6 est :

- un liquide transparent aux longueurs d'onde du faisceau laser, à savoir 1.030 nm, et à la longueur d'onde du ou des lasers annexes de pompage optique,

- un liquide dont une température minimise le coefficient thermo-optique de ce liquide de refroidissement dans une plage compatible avec le fonctionnement de la tête amplificatrice laser 1

- un liquide qui comprend des propriétés thermiques qui en font un bon caloporteur.

Le liquide de refroidissement 6 est par exemple de l'eau. En effet, l'eau présente l'avantage de respecter les conditions liées au liquide de refroidissement énoncées précédemment puisque le coefficient thermo-optique de l'eau s'annule lorsque sa température est proche de 0°C. En variante, le liquide de refroidissement 6 est de l'eau lourde, $D_2O$, qui est moins absorbante que l'eau ordinaire ($H_2O$) à la longueur d'onde du ou des lasers annexes de pompage optique, qui peut être à 940 nm ou 970 nm et à la longueur d'onde du Yb :YAG (1.030 nm). En variante, le liquide de refroidissement 6 est de l'huile ou est un solvant. Dès lors, et comme énoncé précédemment, le liquide de refroidissement 6 rentre dans le carter par un port d'entrée 40 à une température ciblée, s'écoule en direction de l'au moins une plaque du milieu actif 2, échange thermiquement avec l'au moins une plaque du milieu actif 2 en circulant le long de l'au moins une plaque, avant d'être évacué par le biais du port de sortie 42 en ayant été chauffé par le milieu actif 2. Selon une autre variante préférentielle, le liquide de refroidissement 6 est de l'eau désionisée, obtenue par distillation, dispensée de tous minéraux. L'utilisation de l'eau désionisée présente l'avantage d'éviter d'encrasser l'intérieur de la tête amplificatrice laser 1, et d'endommager les surfaces optiques des cristaux. Dès lors, le moyen de régulation 102 de la température du liquide de refroidissement 6 est apte à réguler la température du liquide de refroidissement 6, à savoir l'eau, entre 0°C et 10°C, 10°C étant la limite de température de l'eau pour laquelle la condition C1 est respectée.

Selon une autre variante, il peut également être envisagé de mélanger différent liquides de refroidissement 6 de sorte à pouvoir influencer la valeur de température annulant le coefficient thermo-optique |$dn/dT$| de ce mélange de liquide de refroidissement. Dès lors, le liquide de refroidissement 6 est un mélange d'au moins deux substances chimiques et présente un coefficient thermo-optique différent de celui de chacune de ces au moins deux substances. A titre d'exemple indicatif, le mélange de liquide de refroidissement peut comprendre un volume d'eau équivalent à 90% du volume du mélange de liquide de refroidissement et un volume d'eau lourde équivalent à 10% du volume du mélange de liquide de refroidissement. Dès lors, la température du mélange de liquide de refroidissement permettant l'annulation de son coefficient thermo-optique est accrue d'environ 0.8°C ce qui présente l'avantage de s'éloigner de la température de solidification du mélange de liquide de refroidissement. Le mélange de liquide de refroidissement peut également comprendre des solvants organiques équivalents à un volume compris entre 1% et 5% du volume du mélange de liquide de refroidissement.

De préférence et afin de limiter la variation locale de chemin optique $\Delta n * L$, le moyen de régulation 102 de la température du liquide de refroidissement 6 régule la température du liquide de refroidissement 6 telle que coefficient thermo-optique $dn/dT$ du liquide de refroidissement 6 satisfasse à la condition suivante :

$$|dn/dT| < \frac{3\lambda_0}{\Delta T * \sum \varphi_H} \quad (C2)$$

En effet, la condition C2 permet alors de réguler la température du liquide de refroidissement 6, à savoir l'eau, entre 0°C et 5 °C, et d'avoir une différence de température $\Delta T$ entre le liquide de refroidissement 6 et l'au moins une plaque du milieu actif 2 accrue (entre 15°C et 20°C) pour un diamètre hydraulique $\varphi_H$ de l'au moins un canal de refroidissement 101 du liquide de refroidissement 6 égale à 3 millimètres traversé deux fois et pour une longueur d'onde $\lambda_0$ du faisceau laser 80 dans le vide de 1.030 nm tout en assurant un coefficient thermo-optique $dn/dT$ du liquide de refroidissement 6 égal à 30e-6, c'est à dire équivalent à 0 traduisant ainsi l'impact négligeable du liquide de refroidissement 6 sur le faisceau laser incident 80 et sur le faisceau laser amplifié 82 le traversant.

Selon une variante idéale, le facteur alpha est égal à 1,5 de sorte à générer une condition C3 d'optimisation de la régulation du coefficient thermo-optique $dn/dT$ du liquide de refroidissement 6 :

$$|dn/dT| < \frac{1,5\lambda_0}{\Delta T * \sum \varphi_H} \quad (C3)$$

En outre, la température de travail optimale du liquide de refroidissement 6, à savoir l'eau, ou température à laquelle l'eau permet une extraction optimale de la chaleur en provenance du milieu actif 2, est proche du point de solidification de l'eau. Dès lors, l'utilisation, dans le circuit de refroidissement 100 d'un serpentin, comme il est fait de manière usuelle, génère de la glace qui enveloppe le serpentin et fait obstacle au refroidissement de l'eau.

Ainsi, de manière avantageuse, le moyen de refroidissement 10 comprend un dispositif de stockage 105 du liquide de refroidissement 6. A titre d'exemple indicatif, le dispositif de stockage 105 est un bac de stockage d'eau. De plus, le liquide de refroidissement 6 est partiellement sous forme liquide et partiellement sous forme solide de sorte à être à l'équilibre entre sa phase liquide et sa phase solide. C'est-à-dire que de l'eau sous forme de glace peut être observable dans le dispositif de stockage 105 en plus de l'eau sous forme liquide. Un mélange hétérogène entre l'eau glacé et l'eau sous forme liquide présente ainsi l'avantage de maintenir la température du liquide de refroidissement 6, à savoir l'eau, à une température très basse. A titre d'exemple indicatif, un bac de stockage d'eau comprenant un mélange hétérogène d'eau glacé et d'eau sous forme liquide maintenu à une température d'environ 0,2 °C garanti une température du liquide de refroidissement dans le circuit de refroidissement 100 d'environ 1°C optimisant l'échange thermique dans le carter 4.

Afin de pouvoir faire circuler uniquement l'eau sous forme liquide dans le circuit de refroidissement 100, le moyen de refroidissement 10 comprend un dispositif de pompage 106 du liquide de refroidissement 6 apte à aspirer la phase liquide du liquide de refroidissement 6, à savoir l'eau sous forme liquide, du dispositif de stockage 105. En outre, le moyen de régulation du débit 104 du liquide de refroidissement 6 et le dispositif de pompage 106 du liquide de refroidissement 6 peuvent être confondus dans le cas, par exemple, d'une pompe hydraulique réglable.

La tête amplificatrice laser 1 comprend également un système de filtrage physico-chimique et de purification biologique 108 du liquide de refroidissement 6. Le système de filtrage physico-chimique et de purification biologique 108 est configuré pour éliminer les micro-organismes biologiques, en particulier les algues pouvant encrasser l'intérieur de la tête amplificatrice laser 1 et d'endommager les surfaces optiques des cristaux. Le système de filtrage physico-chimique et de purification biologique 108 est par exemple un dispositif de filtration de nanoparticules, dont une partie est classique dans le principe, dans lequel le liquide de refroidissement 6 traverse des volumes filtrants. Le système de filtrage physico-chimique et de purification biologique 108 permet la suppression de toute nanoparticule physique, issue soit de poussières provenant de l'air ambiant, soit de l'arrachement d'éléments de surface à tout endroit dans la tête amplificatrice laser 1 ou dans le circuit de refroidissement 100, soit de dépôts d'origine électrochimique, si le circuit de refroidissement 100 comprend des métaux différents, induisant un phénomène d'oxydo-réduction. Par ailleurs, le système de filtrage physico-chimique et de purification biologique 108 empêche le développement d'une prolifération de micro-organisme, en rajoutant, par exemple des additifs dans le liquide de refroidissement 6.

La figure 2 illustre un deuxième mode de réalisation schématique de la tête amplificatrice laser 1 comprenant un système de vérification 12 de la qualité spatiale de la lumière laser amplifiée. Le système de vérification 12 comprend un nombre non limité de capteurs optiques (CCD1, CCD2...). Un premier capteur optique CCD1 est aligné avec une première lentille L1 qui reçoit le faisceau laser amplifié 82 selon un premier chemin optique CO1. De plus, la distance optique entre la première lentille L1 et le carter 4 est choisie de sorte à générer, sur le premier capteur optique CCD1, une visualisation dite « en champ proche », qui image sur le premier capteur optique CCD1 les éventuels effets des turbulences au niveau de la surface de la première lentille L1. Un deuxième capteur optique CCD2 est aligné avec une deuxième lentille L2 qui reçoit le faisceau laser amplifié 82 selon un deuxième chemin optique CO2 distinct du premier chemin optique CO1. En outre, la distance optique entre la deuxième lentille L2 et le carter 4 est choisie de sorte à générer, sur le deuxième capteur optique CCD2, un profil à l'infini du faisceau laser amplifié (« champ lointain »). Tout effet optique des turbulences du liquide de refroidissement 6 est visible par imagerie strioscopique sur le plan du premier capteur optique CCD1, et se traduit par l'apparition de nouveaux rayons lumineux au niveau du foyer de la deuxième lentille L2, imagé par le capteur optique CCD2. L'évaluation quantitative de l'énergie dispersée loin de la tache focale, au niveau du foyer, permet de qualifier l'impact des turbulences liées au liquide de refroidissement 6 sur l'amplification du faisceau incident 80 par la tête amplificatrice laser 1.

En outre, le moyen de refroidissement 10 comprend des capteurs (110,111, 112, 113) positionnés le long du circuit de refroidissement 100 de manière à mesurer le débit et/ou la température du liquide de refroidissement 6 circulant dans le circuit de refroidissement 100 et d'en déduire le nombre de Reynolds dans l'au moins un canal 101 du carter 4. Plus précisément, les capteurs (110,111, 112) permettent de mesurer directement la température du liquide de refroidissement 6. Les capteurs (110,111, 112) permettent ainsi d'estimer la viscosité cinématique du liquide de refroidissement 6 en tout point du circuit de refroidissement. Le capteur 113 permet de mesurer le débit du liquide de refroidissement 6, l'ensemble de ces mesures permettant d'obtenir la valeur du paramètre de Reynolds en tout point du circuit de refroidissement 100 et du carter 4, en particulier dans l'au moins un canal de refroidissement 101.. A titre d'exemple indicatif, le moyen de refroidissement 10 comprend :

- un premier capteur 110 disposé dans le dispositif de stockage 105 de sorte à mesurer la température du liquide de refroidissement 6,

- un deuxième capteur 111 disposé à proximité du port d'entrée 40 du carter afin de mesurer la température et du liquide de refroidissement 6 avant extraction de la chaleur produite par le milieu actif 2,

- un troisième capteur 112 disposé à proximité du port de sortie 42 du carter 4 afin de mesurer la température du liquide de refroidissement 6 après extraction de la chaleur produite par le milieu actif 2,

- un quatrième capteur 113 disposé en série du moyen de contrôle 104 du débit, afin de mesurer le débit du liquide de refroidissement 6.

Les capteurs 111 et 113 permettent de mesurer le nombre de Reynolds à l'entrée de l'au moins un canal de refroidissement 101, et les capteurs 112 et 113 permettent de mesurer le nombre de Reynolds en sortie de l'au moins un canal de refroidissement 101. L'ensembles des capteurs (110, 111, 112, 113) permettent ainsi de mesurer le nombre de Reynolds du liquide de refroidissement 6 et de contrôler le débit du liquide de refroidissement 6, par exemple par le moyen de régulation du débit 104 du liquide de refroidissement 6 ou par une boucle d'asservissement.

L'ensemble des capteurs 110, 111, 112 permettent de garantir que la température de travail du liquide de refroidissement, c'est-à-dire la température à laquelle le liquide de refroidissement 6 débute l'extraction thermique dans le carter 4, ne dépasse pas une valeur de coefficient thermo-optique du liquide de refroidissement pouvant impacter le faisceau laser amplifié 82 du début à la fin du trajet du liquide de refroidissement 6 dans le carter 4.

Selon une variante, la tête amplificatrice laser 1 comprend un hublot de contact 411, dont une face du hublot de contact 411 est en appui contre le carter 4, un volume d'isolation hygroscopique 43 et un hublot excentré 412. Le hublot de contact 411, le volume d'isolation hygroscopique 43 et un hublot excentré 412 sont successivement aligné parallèlement au faisceau laser incident 80 et au faisceau laser amplifié 82 de sorte que le faisceau laser incident 80 traverse successivement un hublot excentré 412, un volume d'isolation hygroscopique 43 et un hublot de contact 411 avant de traverser le carter 4 et de sorte que le faisceau laser amplifié 82 par le milieu actif 2, en sortant du carter 4, traverse successivement un hublot de contact 411, un volume d'isolation hygroscopique 43 et un hublot excentré 412. Le volume d'isolation hygroscopique 43 des hublots 41 permet d'éviter un phénomène de condensation sur les hublots 41 à cause du différentiel de température observable entre le liquide de refroidissement 6 et l'environnement de la tête amplificatrice laser 1. Le volume d'isolation hygroscopique 43 prend la forme d'une chambre, isolée du hublot de contact 411 et du hublot excentré 43, remplie d'air à pression ambiante. Par ailleurs, le volume d'isolation hygroscopique 43 peut comprendre un sachet de dessicant afin d'absorber l'humidité ambiante.

En effet, la condensation est d'abord due au fait que la température de refroidissement du liquide de refroidissement 6, en satisfaisant l'une des conditions C1, C2 ou C3, est alors inférieure à la température dite de « point de rosée ». Par contact, les hublots de contact 411 et les hublots excentrés 412 sont portés à la température du liquide de refroidissement 6, et donc en dessous du point de rosée, donnant lieu à de la condensation. L'utilisation du volume d'isolation hygroscopique 43 permet ainsi se soustraire à ce critère de choix de la température du liquide de refroidissement respectant le point de rosée.

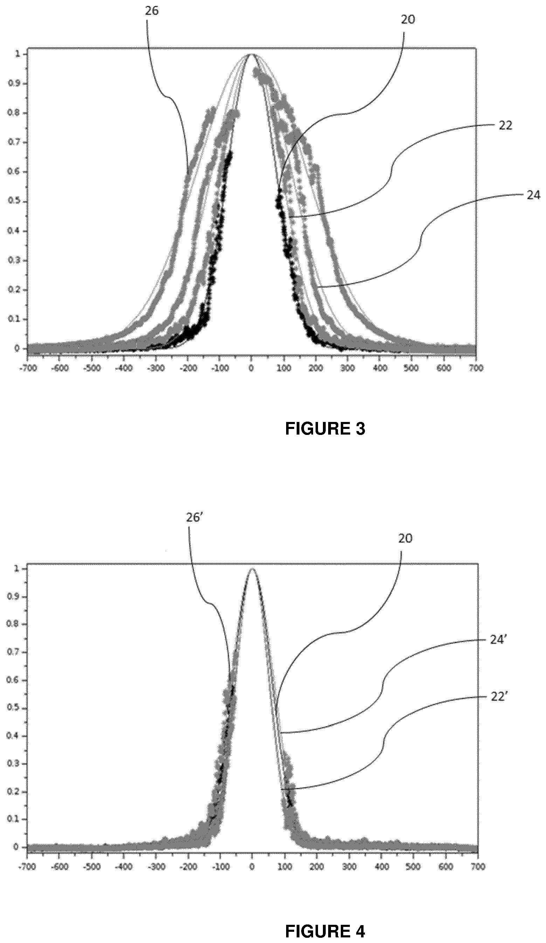

La figure 3 représente un graphique de la distribution des fréquences spatiales pour un profil de champ lointain d'une tête amplificatrice selon l'état de l'art refroidie par l'intermédiaire d'un liquide de refroidissement, à savoir de l'eau, dont la température est à 20 °C. Les turbulences de diverses natures apparaissant dans le liquide de refroidissement sous charge thermique se traduisent par des fluctuations sur le front d'onde du faisceau laser amplifié 82. Ces fluctuations induisent à l'apparition de nouvelles fréquences spatiales en « champ lointain ».

La figure 3 est à comparer avec la figure 4 qui représente le même graphique de la largeur de la distribution des fréquences spatiales pour un profil de champ lointain de la tête amplificatrice refroidie par l'intermédiaire du liquide de refroidissement 6 à une température d'environ 1°C selon l'invention.

Ainsi, les figures 3 et 4 présentent une courbe de référence 20 représentant la largeur de la distribution des fréquences spatiales sans charge thermique sur le milieu actif 2. Les courbes 22, 24 et 26 représentent alors respectivement les fréquences spatiales pour des flux de liquide de refroidissement croissants de 1, 5 et 12 litres par minute. Dès lors, il est possible d'observer sur la figure 3 un élargissement croissant des distributions de fréquences spatiales entre les courbes 22, 24 et 26 dû à la présence croissante, en fonction du flux de liquide de refroidissement choisi, de turbulences pour l'état de l'art. A l'inverse, cet élargissement des courbes 22', 24' et 26', représentant respectivement les fréquences spatiales pour des flux de liquide de refroidissement croissants de 1, 5 et 12 litres par minute, est très limité à tel point que les courbes 22', 24' et 26' se superposent avec la courbe de référence 20 traduisant un fonctionnement optimal en termes de températures sans atténuation de la qualité du faisceau laser amplifié.

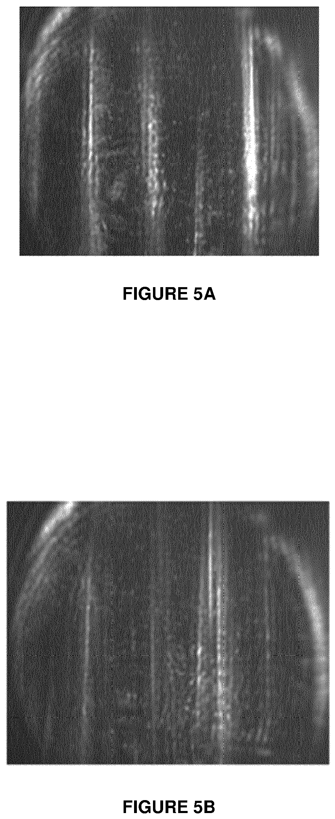

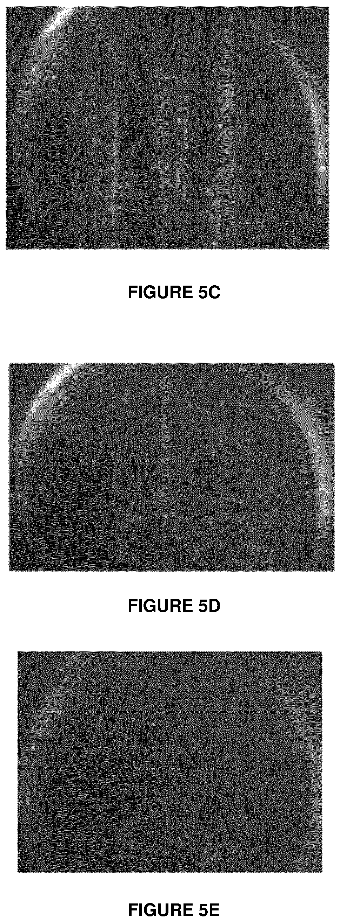

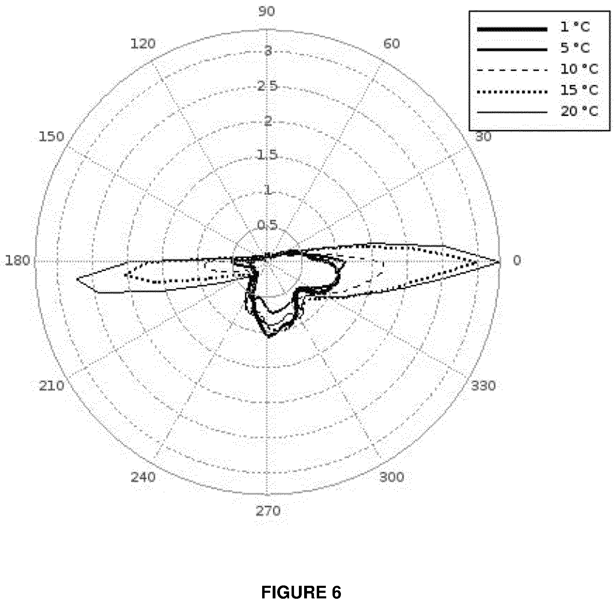

Les figures 5A, 5B, 5C, 5D et 5E sont, quant à elles, des images acquises par un capteur optique d'un faisceau laser amplifié après avoir traversé un liquide de refroidissement, à savoir de l'eau, en régime turbulent, pour un nombre de Reynolds activement maintenu égal à 4600, à une température de 20 °C pour la figure 5A, à une température de 15 °C pour la figure 5B, à une température de 10 °C pour la figure 5C, à une température de 5 °C pour la figure 5A et à une température de 1°C pour la figure 5E. De plus, la différence de température $\Delta T$ entre la température de la surface de l'au moins une plaque du milieu actif 2 et la température de l'eau est maintenue à 17°C. Ainsi, la figure 5A permet de mettre en évidence la présence de stries verticales, dans le sens de circulation du liquide de refroidissement, qui résultent de l'apparition d'instabilités hydrodynamiques dans l'écoulement du fluide de refroidissement. En effet, à 20 °C, le coefficient thermo-optique de l'eau est non négligeable et les instabilités hydrodynamiques engendrent des fluctuations locales significatives de l'indice optique qui provoquent une diffusion du faisceau laser. A l'inverse, à 1°C, comme énoncé précédemment, le coefficient thermo-optique de l'eau est négligeable, ce qui se traduit par une absence des stries verticales sur la figure 6. Dès lors, l'impact des turbulences dans le liquide de refroidissement est négligeable et les capacités amplificatrices de l'ytterbium:YAG sur le faisceau laser incident 80 sont notablement améliorées de l'ordre de 5% à 10%. Les figures 5B, 5C et 5D montrent ainsi la disparition progressive des stries verticales au fur et à mesure que la température s'approche de l'optimum, à savoir 0°C pour l'eau. Dès lors, les turbulences étant identiques dans le cas de figure 5A à 5E, seule leur empreinte sur le faisceau varie.

La figure 6 est un diagramme polaire représentant le rapport C entre l'énergie diffusée hors du faisceau laser amplifié 82, et l'énergie restante dans le faisceau, en **fonction** d'un angle azimutal $\theta$ pour différentes températures du liquide de refroidissement. L'angle $\theta$ est défini dans un plan perpendiculaire à l'axe de propagation du faisceau laser amplifié 82, et 270° correspond à la direction d'écoulement du liquide de refroidissement dans le carter 4. Le rapport C pour un angle $\theta$ est calculé sur l'imagerie en champ lointain comme le rapport entre l'énergie dans le « piédestal » spatial du faisceau laser amplifié et l'énergie contenue dans la tache centrale gaussienne, pour un secteur angulaire différentiel centré sur la direction caractérisée par l'angle $\theta$. On peut remarquer que, au fur et à mesure que l'on s'éloigne de la température optimale de 0°C, le piédestal du faisceau laser amplifié 82 s'élargit dans une direction perpendiculaire à l'écoulement du liquide de refroidissement. On reconnaît là l'effet de la diffraction du faisceau laser amplifié 82 par les stries de turbulence visibles en champ proche, représentées en figure 5A par exemple.

L'invention vise donc à améliorer l'extraction thermique de têtes amplificatrices laser hautes puissance en utilisant un fluide transparent, à savoir le liquide de refroidissement, en régime turbulent traversé par le faisceau laser à amplifier. Le faisceau laser à amplifier conserve une qualité optique très acceptable lors de la traversé du fluide transparent en stabilisant la température du fluide sur une plage où l'indice thermo-optique de ce dernier est proche de zéro.

**Revendications**

1. Tête amplificatrice laser (1) comprenant au moins une plaque d'un milieu actif (2) laser à état solide disposée dans un carter (4) pourvu d'un port d'entrée (40) et d'un port de sortie (42) pour un liquide de refroidissement (6), ainsi que d'au moins une fenêtre (41) permettant à un faisceau laser à amplifier (80) de traverser la ou les plaques de milieu actif (2) laser, comprenant également :

   - un moyen de refroidissement (10) du milieu actif (2), le moyen de refroidissement (10) comprenant un circuit de refroidissement (100) relié au carter (4) par l'intermédiaire du port d'entrée (40) et du port de sortie (42), le circuit de refroidissement étant adapté pour mettre le liquide de refroidissement (6) en circulation en régime turbulent, le moyen de refroidissement (10) comprenant au moins un canal de refroidissement (101) disposé dans le carter (4), reliant le port d'entrée (40) et le port de sortie (42), et en contact avec le milieu actif (2), dans lequel le liquide de refroidissement s'écoule de sorte à permettre un échange thermique entre le milieu actif (2) et le liquide de refroidissement (6),

   **caractérisé en ce que**
   le moyen de refroidissement (10) comprend également un moyen de régulation (102) de la température du liquide de refroidissement (6) apte à réguler une température du liquide de refroidissement (6) telle qu'un coefficient thermo-optique *dn/dT* du liquide de refroidissement (6) satisfasse à la condition suivante :

   $$|dn/dT| < \frac{6\lambda_0}{\Delta T * \sum \varphi_H}$$

   Et de préférence

   $$|dn/dT| < \frac{3\lambda_0}{\Delta T * \sum \varphi_H}$$

   où *ΔT* représente la différence de température entre le liquide de refroidissement (6) et l'au moins une plaque du milieu actif (2), $\Sigma \varphi_H$ représente la somme des diamètres hydraulique des canaux de refroidissement (101) traversés par le faisceau laser (80) et $\lambda_0$ représente la longueur d'onde du faisceau laser (80) dans le vide.

2. Tête amplificatrice laser (1) selon la revendication 1, dans laquelle le moyen de régulation (10) de la température du liquide de refroidissement est apte à annuler le coefficient thermo-optique du liquide de refroidissement (6).

3. Tête amplificatrice laser (1) selon l'une des revendications 1 ou 2, dans laquelle le moyen de refroidissement (10) comprend un moyen de régulation du débit (104) du liquide de refroidissement (6) apte à réguler un nombre de Reynolds du liquide de refroidissement (6) de sorte à être supérieur à 2300.

4. Tête amplificatrice laser (1) selon l'une des revendications précédentes, dans laquelle le liquide de refroidissement (6) est de l'eau.

5. Tête amplificatrice laser (1) selon l'une des revendications précédentes dans laquelle le liquide de refroidissement (6) est un mélange d'au moins deux substances chimiques et présente un coefficient thermo-optique différent de celui de chacune de ces au moins deux substances.

6. Tête amplificatrice laser (1) selon l'une des revendications 4 ou 5, dans laquelle le moyen de régulation (10) de la température du liquide de refroidissement (6) est apte à réguler la température du liquide de refroidissement (6) entre 0°C et 10°C.

7. Tête amplificatrice laser (1) selon la revendication 6, dans laquelle le moyen de refroidissement (10) comprend :

   - un dispositif de stockage (105) du liquide de refroidissement (6), ledit liquide de refroidissement (6) étant à l'équilibre entre sa phase liquide et sa phase solide,
   - un dispositif de pompage (106) du liquide de refroidissement (6) apte à aspirer la phase liquide du liquide de refroidissement (6) du dispositif de stockage (105).

8. Tête amplificatrice laser (1) selon l'une des revendications précédentes, dans laquelle le liquide de refroidissement (6) est en contact avec une plaque de la pluralité de plaque du milieu actif (2).

9. Tête amplificatrice laser (1) selon l'une des revendications précédentes, comprenant un hublot de contact (411), un volume d'isolation hygroscopique (43) et un hublot excentré (412), le hublot de contact (411) ayant une face en appui contre le carter (4), le hublot de contact (411), le volume d'isolation hygroscopique (43) et le hublot excentré (412) étant successivement alignés selon le flux laser (80).

10. Tête amplificatrice laser (1) selon l'une des revendications précédentes, comprenant au moins un capteur (110,111, 112, 113) positionné le long du circuit de refroidissement (100) de manière à mesurer le débit et/ou la température du liquide de refroidissement (6) de sorte à en déduire le nombre de Reynolds du liquide de refroidissement (6) dans l'au moins un canal de refroidissement (101) du carter (4).

11. Tête amplificatrice laser (1) selon l'une des revendications précédentes, comprenant un système de filtrage physico-chimique et de purification biologique (108) du liquide de refroidissement (6).

12. Tête amplificatrice laser (1) selon l'une des revendications précédentes, comprenant un système de vérification de la qualité spatiale (12) d'un faisceau laser amplifié (82) à la sortie de la tête amplificatrice laser (1).


**Patentansprüche**

1. Laserverstärkerkopf (1), umfassend mindestens eine Platte eines aktiven Festkörperlasermediums (2), die in einem Gehäuse (4) angeordnet ist, das mit einer Einlassöffnung (40) und einer Auslassöffnung (42) für eine Kühlflüssigkeit (6) versehen ist, sowie mindestens einem Fenster (41), das es einem zu verstärkenden Laserstrahl (80) ermöglicht, die Platte(n) des aktiven Lasermediums (2) zu durchdringen, ferner umfassend:

   - ein Kühlmittel (10) für das aktive Medium (2), wobei das Kühlmittel (10) einen Kühlkreislauf (100) umfasst, der über die Einlassöffnung (40) und die Auslassöffnung (42) mit dem Gehäuse (4) verbunden ist, wobei der Kühlkreislauf dazu ausgelegt ist, die Kühlflüssigkeit (6) in turbulenter Strömung in Umlauf zu bringen, wobei das Kühlmittel (10) mindestens einen Kühlkanal (101) umfasst, der im Gehäuse (4) angeordnet ist, die Einlassöffnung (40) und die Auslassöffnung (42) verbindet und mit dem aktiven Medium (2) in Kontakt steht, in dem die Kühlflüssigkeit so strömt, dass ein Wärmeaustausch zwischen dem aktiven Medium (2) und der Kühlflüssigkeit (6) ermöglicht wird, **dadurch gekennzeichnet, dass** das Kühlmittel (10) ferner ein Reguliermittel (102) für die Temperatur der Kühlflüssigkeit (6) umfasst, das geeignet ist, eine Temperatur der Kühlflüssigkeit (6) so zu regulieren, dass ein thermooptischer Koeffizient $dn/dT$ der Kühlflüssigkeit (6) die folgende Bedingung erfüllt:

$$|dn/dT| < \frac{6\lambda_0}{\Delta T * \sum \varphi_H}$$

und vorzugsweise

$$|dn/dT| < \frac{3\lambda_0}{\Delta T * \sum \varphi_H}$$

wobei $\Delta T$ die Temperaturdifferenz zwischen der Kühlflüssigkeit (6) und der mindestens einen Platte des aktiven Mediums (2) darstellt, $\Sigma \varphi_H$ die Summe der hydraulischen Durchmesser der vom Laserstrahl (80) durchquerten Kühlkanäle (101) darstellt und $\lambda_0$ die Wellenlänge des Laserstrahls (80) im Vakuum darstellt.

2. Laserverstärkerkopf (1) nach Anspruch 1, wobei das Reguliermittel (10) für die Temperatur der Kühlflüssigkeit geeignet ist, den thermooptischen Koeffizienten der Kühlflüssigkeit (6) aufzuheben.

3. Laserverstärkerkopf (1) nach einem der Ansprüche 1 oder 2, wobei das Kühlmittel (10) ein Durchflussreguliermittel (104) für die Kühlflüssigkeit (6) umfasst, das eine Reynolds-Zahl der Kühlflüssigkeit (6) so regulieren kann, dass sie größer als 2300 ist.

4. Laserverstärkerkopf (1) nach einem der vorstehenden Ansprüche, wobei die Kühlflüssigkeit (6) Wasser ist.

5. Laserverstärkerkopf (1) nach einem der vorstehenden Ansprüche, wobei die Kühlflüssigkeit (6) ein Gemisch aus mindestens zwei chemischen Substanzen ist und einen thermooptischen Koeffizienten aufweist, der sich von dem jeder dieser mindestens zwei Substanzen unterscheidet.

6. Laserverstärkerkopf (1) nach einem der Ansprüche 4 oder 5, wobei das Reguliermittel (10) für die Temperatur der Kühlflüssigkeit (6) geeignet ist, die Temperatur der Kühlflüssigkeit (6) zwischen 0°C und 10°C zu regulieren.

7. Laserverstärkerkopf (1) nach Anspruch 6, wobei das Kühlmittel (10) umfasst:

   - eine Speichervorrichtung (105) für die Kühlflüssigkeit (6), wobei sich die Kühlflüssigkeit (6) im Gleichgewicht zwischen ihrer flüssigen Phase und ihrer festen Phase befindet,
   - eine Pumpvorrichtung (106) für die Kühlflüssigkeit (6), die die flüssige Phase der Kühlflüssigkeit (6) aus der Speichervorrichtung (105) ansaugen kann.

8. Laserverstärkerkopf (1) nach einem der vorstehenden Ansprüche, wobei die Kühlflüssigkeit (6) mit einer der Vielzahl an Platten des aktiven Mediums (2) in Kontakt steht.

9. Laserverstärkerkopf (1) nach einem der vorstehenden Ansprüche, umfassend ein Kontaktfenster (411), ein hygroskopisches Isoliervolumen (43) und ein exzentrisches Fenster (412), wobei das Kontaktfenster (411) eine Fläche aufweist, die am Gehäuse (4) anliegt, wobei das Kontaktfenster (411), das hygroskopische Isoliervolumen (43) und das exzentrische Fenster (412) nacheinander entlang des Laserstrahls (80) ausgerichtet sind.

10. Laserverstärkerkopf (1) nach einem der vorstehenden Ansprüche, umfassend mindestens einen Sensor (110, 111, 112, 113), der entlang des Kühlkreislaufs (100) so angebracht ist, dass er den Durchfluss und/oder die Temperatur der Kühlflüssigkeit (6) misst, um daraus die Reynolds-Zahl der Kühlflüssigkeit (6) in dem mindestens einen Kühlkanal (101) des Gehäuses (4) abzuleiten.

11. Laserverstärkerkopf (1) nach einem der vorstehenden Ansprüche, umfassend ein physikalisch-chemisches Filter- und biologisches Reinigungssystem (108) für die Kühlflüssigkeit (6).

12. Laserverstärkerkopf (1) nach einem der vorstehenden Ansprüche, umfassend ein System zur Überprüfung der räumlichen Qualität (12) eines verstärkten Laserstrahls (82) am Ausgang des Laserverstärkerkopfs (1).

## Claims

1. **A laser** amplifier head (1) comprising at least one plate of a solid-state laser active medium (2) which is placed inside a housing (4) which has an inlet port (40) and an outlet port (42) for a cooling liquid (6), as well as at least one window (41) that allows a laser beam to be amplified (80) to pass through the plate or plates of laser active medium (2), further comprising:

    - a cooling means (10) for the active medium (2), the cooling means (10) comprising a cooling circuit (100) connected to the housing (4) via the inlet port (40) and the outlet port (42), the cooling circuit being suited to the circulation of a cooling liquid (6) in turbulent regime, the cooling means (10) comprising at least one cooling duct (101) inside the housing (4), connecting the inlet port (40) and the outlet port (42), and in contact with the active medium (2), wherein the cooling liquid flows so as to allow an exchange of heat between the active medium (2) and the cooling liquid (6),
    **characterized in that** the cooling means (10) also comprises a regulating means (102) of the cooling liquid (6) temperature able to regulate a temperature of the cooling liquid (6) such that a thermo-optical coefficient $\frac{dn}{dT}$ of the cooling liquid (6) satisfies the following condition:

$$\left|\frac{dn}{dT}\right| < \frac{6\lambda_0}{\Delta T * \sum \varphi_H}$$

and preferably

$$\left|\frac{dn}{dT}\right| < \frac{3\lambda_0}{\Delta T * \sum \varphi_H}$$

where $\Delta T$ represents the difference in temperature between the cooling liquid (6) and the at least one active medium plate (2), $\sum \varphi_H$ represents the sum of the hydraulic diameters of the cooling ducts (101) through which the laser beam (80) passes and $\lambda_0$ represents the wavelength of the laser beam (80) in a vacuum.

2. The laser amplifier head (1) according to claim 1, wherein the means (10) of regulating the temperature of the cooling liquid is able to cancel the thermo-optical coefficient of the cooling liquid (6).

3. The laser amplifier head (1) according to one of claims 1 or 2, wherein the cooling means (10) comprises a means (104) of regulating the flow rate of the cooling liquid (6) able to regulate a Reynolds number of the cooling liquid (6) so as to be greater than 2300.

4. The laser amplifier head (1) according to one of the preceding claims, wherein the cooling liquid (6) is water.

5. The laser amplifier head (1) according to one of the preceding claims, wherein the cooling liquid (6) is a mixture of at least two chemical substances and has a thermo-optical coefficient different from that of each of these at least two substances.

6. The laser amplifier head (1) according to one of claims 4 or 5, wherein the means (10) of regulating the temperature of the cooling liquid (6) is able to regulate the temperature of the cooling liquid (6) between 0°C and 10°C.

7. The laser amplifier head (1) according to claim 6, wherein the cooling means (10) comprises:

    - a storage device (105) for the cooling liquid (6), said cooling liquid (6) being in equilibrium between its liquid and solid phases,
    - a pumping device (106) for the cooling liquid (6) able to draw up the liquid phase of the cooling liquid (6) from the storage device (105).

8. The laser amplifier head (1) according to one of the preceding claims, wherein the cooling liquid (6) is in contact with one of the plurality of active medium plates (2).

9. The laser amplifier head (1) according to one of the preceding claims, comprising a contact opening (411), a hygroscopic insulating volume (43) and an eccentric opening (412), the contact opening (411) having a face bearing against the housing (4), the contact opening (411), the hygroscopic insulating volume (43) and the eccentric opening (412) being successively aligned along the laser flow (80).

10. The laser amplifier head (1) according to one of the preceding claims, comprising at least one sensor (110, 111, 112, 113) positioned along the cooling circuit (100) so as to measure the flow rate and/or temperature of the cooling liquid (6) in order to deduce the Reynolds number of the cooling liquid (6) in the at least one cooling duct (101) of the housing (4).

11. The laser amplifier head (1) according to one of the preceding claims, comprising a physico-chemical filtering and biological purification system (108) for the cooling liquid (6).

12. The laser amplifier head (1) according to one of the preceding claims, comprising a system for checking the spatial quality (12) of an amplified laser beam (82) at the outlet of the laser amplifier head (1).

**FIGURE 1**

**FIGURE 2**

**FIGURE 3**

**FIGURE 4**

**FIGURE 5A**

**FIGURE 5B**

FIGURE 5C

FIGURE 5D

FIGURE 5E

FIGURE 6

# EP 4 454 076 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **NIE, R. Z** ; **SHE, J. B** ; **ZHAO, P. F. et al.** *Laser Physics Letters*, 2014, vol. 11 (11), 115808
- **FU, XING** ; **LI, PEILIN** ; **LIU, QIANG et al.** 3kW liquid-cooled elastically-supported Nd: YAG multi-slab CW laser resonator. *Optics express*, 2014, vol. 22 (15), 18421-18432
- **WANG, KE** ; **TU, BO** ; **JIA, CHUNYAN et al.** 7kW direct-liquid-cooled side-pumped Nd: YAG multi-disk laser resonator. *Optics Express*, 2016, vol. 24 (13), 15012-15020